# EUROPEAN PATENT APPLICATION

(11) **EP 0 879 827 A2**
(43) Date of publication of application: **25.11.1998**
(21) Application number: 98660049.2
(22) Date of filing: 22.05.1998
(51) Int. Cl.: C08B 11/12

(54) **Method for preparing alkali carboxymethyl cellulose**

(30) Priority: 23.05.1997 FI 972200
(71) Applicant: Metsa Specialty Chemicals Oy, 44101 Aanekoski (FI)
(72) Inventor: Mansikkamäki, Paavo, 44100 Äänekoski (FI); Ruppert, Oliver, 44100 Äänekoski (FI)
(74) Representative: Heikkinen, Esko Juhani

(57) **Abstract**

The invention is related to a method for preparing carboxymethyl cellulose (CMC), comprising steps where the cellulose is ground, moistened with a reaction medium, mercerized with an aqueous solution of NaOH, treated with monochloroacetic acid, and optionally neutralized with acid, whereby a mixture of ethanol and isopropanol (EtOH/IPA) is used.

## Description

The invention is related to an improved method for preparing alkali carboxymethyl cellulose.

Alkali carboxymethyl cellulose (CMC) is frequently used in the form of its sodium salt to modify the rheological properties of aqueous solutions. The viable applications include the following: purification of water, treating of minerals, thickening of foodstuffs and medicines, thickening of cosmetic products, thickening of farm products, use in oil drilling liquids, use in construction materials, modification of ceramic materials, modification of latex colours, use in paper coating, and the use as a protective colloid in emulsion polymerization and suspension polymerization.

CMC is a water-soluble polymer prepared from cellulose. The water-solubility is brought about by adding carboxymethyl groups in a cellulose body. The properties of the CMC are affected by its degree of polymerization (DP), degree of substitution (DS), and the distribution of substituents in the CMC molecular chain. The CMC degree of substitution refers to how many carboxymethyl groups, on the average, are reacted with one glucose unit of a cellulose molecule.

In known methods, CMC is prepared from clean cellulose, normally from bleached sulphite softwood pulp. In preparation of high-viscosity CMC grades, cotton linter is generally used. The preparation is started by mechanically grinding cellulose sheets, cellulose webs or cellulose bales. Various types of known grinders are used. The degree of grinding varies depending on the preparation method.

The ground cellulose is moistened with alcohol that is used as a reaction medium and is mostly either ethanol (EtOH) or isopropanol (IPA). Then an aqueous solution of sodium hydroxide (NaOH) is added to the pulp to effect mercerization. The degree of mercerization depends on the amount of NaOH. During the mercerization, the pulp is agitated and the temperature is preferably adjusted between 10 and 20°C. If ethanol is used as a medium, the dry content of the pulp in mercerization normally varies between 20 and 40%. In the slurry method, IPA is the substance most commonly used and the dry content in mercerization is generally between 10 and 17%.

Monochloroacetic acid (MCA) is then added to the mercerized pulp and, after agitation, the temperature is increased to 50-75°C, so that the MCA is reacted with the free hydroxyl groups of cellulose, forming water-soluble carboxymethyl cellulose. Sodium chloride and sodium glycolate are generated as by-products in the reaction. The technical CMC can be left slightly alkalic or, alternatively, it can be neutralized.

Generally, the product is neutralized and dried as such (technical quality) or it is washed by an alcoholic water solution (purified quality) and dried. Sodium salt of carboxymethyl cellulose is obtained as an end product.

The CMC degree of substitution depends on the amount of NaOH and MCA.

One drawback of the ordinary manufacturing method of CMC described above is the poor chemical efficiency of the solvent system, i.e., the degree of substitution achieved by using a certain amount of solvent is low. Previously, alcohols other than ethanol or isopropanol have been used, such as methanol and butanol, but all other alcohols examined, except for ethanol and isopropanol, have yielded a poorer chemical efficiency and worse product quality. For instance Romanian Patent 104336 describes a method in which a mixture containing ethanol and iso-butanol, n-butanol, n-propanol, acetone or dioxan is used as the solvent.

The present invention aims at eliminating the drawback described above, i.e., improving the solvent system used in the manufacturing method of CMC. The objects of the invention are now achieved by a new solvent system which provides a clearly higher chemical efficiency than the known solvent systems. Furthermore, the end result is a higher-quality product which manifests itself, for example, as a clearer aqueous solution of the product and improved stability of the aqueous solution.

The invention is primarily characterised in what is described in the characterising part of Claim 1.

According to the invention, it is now understood that in the manufacture of CMC, a mixture of ethanol and isopropanol can successfully be used as a medium. Otherwise, the known manufacturing method described above is used in the method according to the invention. According to the invention, a mixture of ethanol and isopropanol with the weight ratio of EtOH/IPA being (10% - 90%)/(90% - 10%), preferably (30% - 70%)/(70% - 30%), most preferably (40% - 60%)/(60% - 40%), results in improving the chemical efficiency by 3-6% for a product that has a degree of substitution DS of 0.75, and by 10-15% for a product that has a degree of substitution DS of 1.0. In mercerization, the water content of an EtOH/IPA mixture according to the invention is preferably in the range of 10-20%.

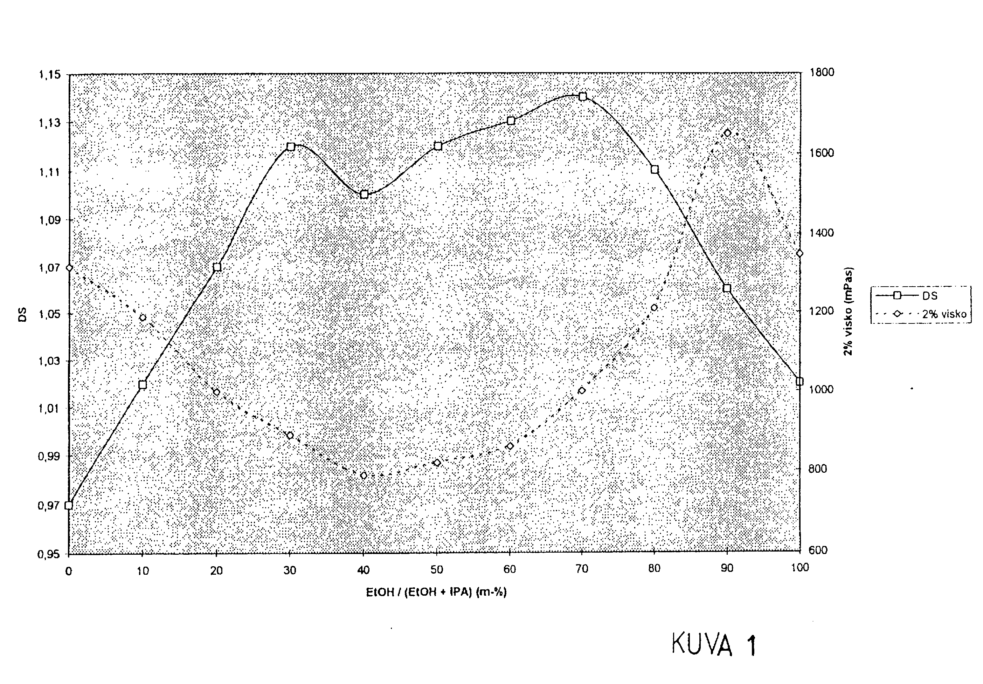

Fig. 1 illustrates the changes in the degree of substitution of 2% aqueous CMC solution as a function of the change in the EtOH/IPA mixture ratio (the weight percent of EtOH in the mixture). The same figure correspondingly shows the changes in viscosity with various mixture ratios. The lowest viscosity is obtained by using a mixture ratio of about 50%/50% when manufacturing a product with a degree of substitution DS of 1.0.

In the following, the invention is described in detail with the aid of a few examples.

### Example 1

Generally, salt decreases the viscosity of aqueous CMC solution, which in some applications is disadvantageous. The effect of salt on the viscosity of the aqueous CMC solution was examined by using products which had been manufactured by using an isopropanol (IPA) medium and, on the other hand, by using a solvent mixture (EtOH/IPA) according to the invention.

A product according to the invention (DS 0.75) was prepared. 1350g of 95 weight% aqueous solution of the EtOH/IPA mixture (50% / 50%) was added to 100g of 100%, ground cellulose (less than 0.3mm). Mercerization was performed by adding, to the mixture, 99g of 50 weight-% aqueous NaOH solution. The mixture was agitated by cooling (less than 20°C) for one hour. 70g of 80 weight-% monochloroacetic acid (MCA) was added to the mercerized pulp, the mixture was agitated the whole time after the addition, and the mixture was heated to 70°C. After one hour, the mixture was cooled and neutralized by using 15% hydrochloric acid. The product was washed three times by using a 75% ethanol solution (1000g / wash).

### Example 2

A product according to the invention (DS 1.0) was prepared. 1350g of 90 weight-% aqueous solution of the EtOH/IPA mixture (50% / 50%) was added to 100g of 100%, ground cellulose (less than 0.3mm). Mercerization was performed by adding, to the mixture, 147g of 50 weight-% aqueous NaOH solution. The mixture was agitated by cooling (less than 20°C) for one hour. 106g of 80 weight-% monochloroacetic acid (MCA) was added to the mercerized pulp, the mixture was agitated the whole time after the addition, and the mixture was heated to 70°C. After one hour, the mixture was cooled and neutralized by using a 15% hydrochloric acid. The product was washed three times by using a 75% ethanol solution (1000g / wash).

### Reference examples 1 and 2

The reference products were prepared in the same way as in Examples 1 and 2 but, instead of the EtOH/IPA solvent mixture, 90% IPA was used as the medium.

Table 2 shows the measurement results of the effect of salt on the viscosity of the aqueous CMC solution for the products of the reference example, which were manufactured in an IPA medium, and for products obtained according to examples 1 and 2, which were manufactured in the solvent mixture according to the invention.

**Table 2**

| Example Medium | 2% CMC viscosity (mPas) | 2% CMC + 4% NaCl viscosity (mPas) |
|---|---|---|
| Example 1 | | |
| EtOH/IPA (50%/50%) | 1400 | 1700 |

| Example 2 | | |
|---|---|---|
| EtOH/IPA (50% / 50%) | 5400 | 6900 |

| Ref.example 1 | | |
|---|---|---|
| IPA | 8800 | 830 |

| Ref.example 2 | | |
|---|---|---|
| IPA | 3700 | 50 |

The table shows that the viscosity of a CMC aqueous solution containing 4% of salt and prepared by using the solvent mixture according to the invention has actually increased as compared to the viscosity of a clean (saltless) aqueous solution. This proves that the carboxyl groups of the CMC prepared in the solvent mixture according to the invention are more evenly distributed in a CMC molecule.

## Claims

1. A method for preparing carboxymethyl cellulose (CMC), comprising steps where the cellulose is ground, moistened with a reaction medium, mercerized with an aqueous solution of NaOH, treated with monochloroacetic acid, and optionally neutralized with acid, **characterized** in that a mixture of ethanol and isopropanol (EtOH/IPA) is used as the reaction medium.

2. A method according to Claim 1, **characterized** in that the weight ratio of EtOH/IPA is (10% - 90%) / (90% - 10%).

3. A method according to Claim 2, **characterized** in that the EtOH/IPA ratio is preferably (30% - 70%) / (70% - 30%).

4. A method according to any of the preceding Claims, **characterized** in that, during mercerization, the water content of the EtOH/IPA mixture is in the range of 10-20%.
